# EUROPEAN PATENT SPECIFICATION

(11) **EP 0 426 724 B1**
(45) Date of publication and mention of the grant of the patent: **27.09.1995**
(21) Application number: 89908538.5
(22) Date of filing: 04.07.1989
(51) Int. Cl.: A01K 5/02

(54) **METHOD AND PLANT FOR MEASURING AND PORTIONING OF FODDER**
VERFAHREN UND ANLAGE ZUR DOSIERUNG UND VERTEILUNG VON FUTTER
PROCEDE ET INSTALLATION DE DOSAGE ET DE DISTRIBUTION DE FOURRAGE

(30) Priority: 14.07.1988 SE 8802631
(43) Date of publication of application: 15.05.1991
(73) Proprietor: ALFA-LAVAL AGRICULTURE INTERNATIONAL AB, 147 21 Tumba (SE)
(72) Inventor: ANDERSSON, Sven, S-741 00 Knivsta (SE)
(74) Representative: Lerwill, John
(86) International application number: SE8900383
(87) International publication number: WO9000384

(56) References cited:
- EP-A- 0 234 605
- EP-A- 0 272 054
- US-A- 4 491 086

## Description

The present invention relates to a method of measuring and portioning of fodder by means of a fodder portioner provided with a dispensing device for dispensing desired quantities of fodder. The invention also relates to a plant for such measuring and portioning of fodder.

When portioning fodder in an animal stable by means of a plant of this kind comprising one or more fodder portioners placed at the feeding places of the stable, it is desirable that the dosing of the fodder takes place in such a way that the intended weight of fodder is dispensed with an acceptable accuracy from each fodder portioner at each feeding occasion.
However, this desire about dosing accuracy must not mean that such complicated and expensive fodder portioners need to be used that investment in such a plant would not be profitable. Therefore, known fodder portioners are usually adapted to dose the volume of the fodder, which is intended to correspond to the desired weight of fodder. Such volume dosing fodder portioners are of a relatively simple construction and are therefore inexpensive.

A known inexpensive fodder portioner of the volume dosing kind comprises a container with a replenishment tube lowered therein. By manual adjustment of the height of the tube in the container, refillable volume in the container can easily be adjusted, the refillable volume corresponding to the desired fodder dose. Thus, from the container the entire content of fodder is dispensed at each feeding occasion by means of a dispensing device of some kind.

Another known fodder portioner of the volume dosing kind comprises a feed screw, which by means of fixed time control is adapted to dispense the intended fodder dose. See for instance US 4.491.086.

However, it has proved that the weight per volume unit of fodder can vary ± 20 %. Therefore, the known volume dosing fodder portioners should be regularly corrected, so that the dispensed doses will have acceptable accuracy. However, such corrections must be carried out manually for each fodder portioner, which is expensive.

Satisfactory accuracy of dispensed fodder doses may be achieved if each fodder portioner of the kind here present is provided with some kind of weighing means, by means of which the fodder is weighed into doses of desired weight. However, a plant comprising such fodder portioners will be too expensive if the number of fodder portioners is large. In addition, when dosing small fodder portions high demands on the weighing means are called for, if high dosing accuracy is to be achieved, which raises the price or the plant even further.

EP 0272054 discloses a computer controlled feeding plant, comprising a plurality of fodder portioners of the volume dosing kind and having one single weighing device for weighing the total quantity of fodder to be distributed to the fodder portioners. The computer is adapted to calculate the average weight of fodder per dose on the basis of the measured total weight of fodder. However, this known feeding plant has a too poor dosing accuracy and will also be too expensive if only one fodder portioner is utilized.

The object of the present invention is to provide a new method of measuring and portioning of fodder, which gives a high dosing accuracy by means of simple and inexpensive means. A further object is to provide a new plant for measuring and portioning of fodder, which to comparatively low price allows a higher dosing accuracy than plants comprising the above described known fodder portioners of the volume dosing kind.

In accordance with the present invention there is provided a method of measuring and portioning of fodder by means of a fodder portioner provided with a dispensing device for dispensing a desired weight of fodder, in which method the fodder portioner is filled with fodder and the dispensing device is activated so that fodder is dispensed from the fodder portioner,
characterised by the steps of:
- sensing a given weight of fodder dispensed from the fodder portioner, the given weight of fodder being less than the desired weight of fodder to be dispensed
- registering the value of a volume related operating variable of the dispensing device corresponding to said sensed given weight of dispensed fodder, and
- controlling the dispensing device in accordance with the sensed given weight and the registered value to keep the dispensing device activated until the volume related operating variable reaches a value corresponding to the desired weight of dispensed fodder.

Hereby, the advantage is achieved that a weighing means of a simple and inexpensive kind can be utilized, for instance a load cell. Thus, this needs only be adapted to indicate a first high value and a second low value of the weight of a fodder portioner with fodder content, the difference between said first and second values constituting the value of said given weight.

In addition, the advantage is achieved that if at least one further fodder portioner is utilized only one of the portioners needs to be provided with a weighing means, while all of the other fodder portioners can be constituted by conventional inexpensive fodder portioners of the volume dosing kind.

Preferably, the volume related operating variable is constituted by the time for dispensing the fodder.

If the dispensing device comprises a rotatable feed screw the volume related operating variable can advantageously be constituted by the number of revolutions of the feed screw for dispensing the fodder.

According to the present invention there is also provided a plant for measuring and portioning of fodder, comprising a fodder portioner, a dispensing device for dispensing a desired weight of fodder from the fodder portioner, a weighing means adapted to sense a given weight of fodder dispensed from the fodder portioner, the given weight being less than the desired weight, and a control unit for controlling the dispensing device, the control unit being adapted to sense an operating variable of the dispensing device related to the volume of dispensed fodder, characterized in that:
- the control unit is adapted to register the value of the volume related operating variable in response to the weighing means, when this senses the given weight of fodder, and
- the control unit is adapted to control the dispensing device in accordance with the sensed given weight and the registered value, such the during operation the dispensing device is kept activated until the volume related operating variable reaches a value corresponding to the desired weight of dispensed fodder.

With advantage, the new plant comprises at least one further fodder portioner with a further dispensing device, the control unit being connected to said further dispensing device and adapted to control said further dispensing device such that during operation said further dispensing device is kept activated until the volume related operating variable reaches a value corresponding to the desired weight of fodder to be dispensed from said further fodder portioner. Hereby, there is no need for providing each of said at least one further fodder portioner with a weighing device.

Preferably, the control unit is adapted to sense the time for dispensing the fodder.

There may be at least one dispensing device comprising a rotatable feed screw, the control unit advantageously being adapted to sense the number of revolutions which each feed screw turns during the dispensing of fodder.

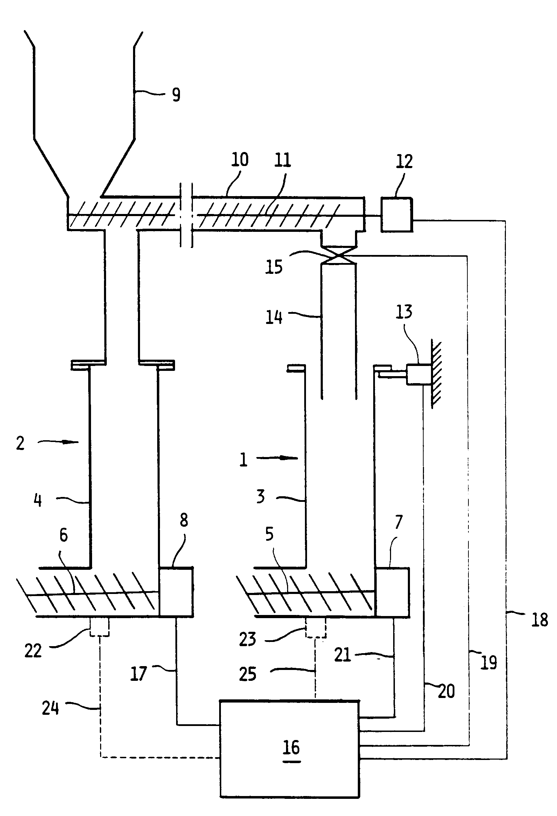

The invention will be explained more closely in the following with reference to the accompanying drawing, in which an embodiment of the plant according to the invention is schematically shown.

The plant shown in the drawing comprises a plurality of fodder portioners 1, 2 (for simplification of the drawing there is shown only two fodder portioners), which have the form of vertically directed tubes 3,4. At the lower ends of the tubes 3,4 there are identical feed screws 5,6 turnably arranged for discharging fodder from the tubes. The fees screws 5,6 are drivable by means of drive motors 7,8, which during operation run on the same and constant rotation speed.

A container 9 for fodder is via a distribution conduit 10 connected to the fodder portioners 1,2. In the distribution conduit 10 there is a feed screw 11 for transportation of fodder from the container 9 to the respective fodder portioners 1,2. A drive motor 12 is coupled to the feed screw 11 for driving the latter.

The fodder portioner 1 is suspended from the weighing means 13 in the form of a load cell. (Alternatively the weighing means 13 may be constituted by a strain gauge or a balance arm). A vertical replenishment tube 14 extends from the distribution conduit 10 a distance down into the tube 3 without being in rigid connection with the tube 3. In the replenishment tube 14 there is a valve 15, which is adjustable between an open and a closed position. (The valve 15 is only needed in certain cases dependent on how the plant is operated, which is clear from the description below of the function of the plant).

A control unit 16 in the shape of a micro processor is via conduits 17, 18, 19, 20 and 21 coupled to the drive motor 8, the drive motor 12, the valve 15, the weighing means 13 and the drive motor 7.

By dashed lines in the drawing there is indicated an alternative embodiment of the plant comprising impulse generators 22,23, which are arranged to indicate the number of revolutions the feed screws 5, 6 rotate. The impulse generators 22, 23 are coupled to the control unit 16 by means of conduits 24, 25.

The plant is operated in the following way: First all of the fodder portioners 1, 2 are filled with fodder by the control unit 16 activating the drive motor 12 and keeping open the valve 15 of the replenishment tube 14. In this described case the valve 15 may possibly be abolished. Hereby the feed screw 11 feeds fodder from the container 9 to the fodder portioners 1, 2 via the distribution conduit 10. The control unit 16 also activates the drive motors 7 and 8 for a short while so that the feed screws 5 and 6 are filled with fodder. Then the control unit 16 closes the valve 15 and stops the drive motor 12.

Now the tube 3 of the fodder portioner 1 is filled with fodder up to the opening of the replenishment tube 14 in the tube 3. Then the control unit 16 activates the drive motor 7, so that the feed screw 5 starts discharging fodder from the fodder portioner 1. When the total weight of the fodder portioner 1 has sunk to a predetermined first value this is indicated by the weighing means 13, the control unit 16 starts registrating the running time of the drive motor 7. (Alternatively the control unit 16 may close the valve 15 during the filling of a portioner 1 when the weighing means 13 indicates said predetermined first value). When the total weight of the fodder portioner 1 has sunk further to a predetermined second value this is indicated by the weighing means 13, the control unit 16 registers the value of the running time of the drive motor 7 between said indications of the weighing means 13. Said registered running time value thus constitutes a measure of the time for dispensing a pre-determined weight of fodder. Since the rotation speed of the drive motor 7 is constant the dispensing time depends on the volume of the dispensed fodder.

(Alternatively the control unit 16 may register the value of the total weight of the fodder portioner 1 measured by the weighing means 13 when the fodder portioner 1 is completely filled before the drive motor 7 is activated. On the basis of this registered weight value and indications from the weighing means 13 the control unit 16 then may register the value of the running time of the drive motor 7 when a predetermined weight of fodder has been dispensed).

Then the control unit 16 calculates a value of the dispensing flow of fodder from the fodder portioner 1 by weight per time unit on the basis of the predetermined weight of dispensed fodder and the registered value of the running time of the drive motor 7 for dispensing the fodder. On the basis of the calculated value of the dispensing flow of fodder the control unit 16 then controls the drive motors of all of the fodder portioners, so that the desired fodder portion is dispensed from each of the fodder portioners.

Alternatively the control unit 16 may register the number of revolutions which the feed screw 5 rotates during the dispensing of fodder if any of the drive motors of the portioners does not have the same rotation speed. In this case the number of revolutions of the feed screw may be indicated by means of the impulse generators indicated in the drawing. Hereby the control unit 16 calculates the value of the discharge weight of fodder per revolution of the feed screw. On the basis of this calculated value the control unit 16 then controls the drive motors of all of the fodder portioners, so that each of the drive motors rotates the respective feed screw a number of revolutions, corresponding to the desired dispensed weight of fodder.

When any of the fodder portioners is getting empty the control unit 16 activates the drive motor 12 and opens the valve 15, so that all of the fodder portioners are filled with fodder, whereafter the drive motor 12 is stopped. The fodder portioners are filled in this way repeatedly until the fodder in the container 9 has run out. A new value of the dispensing flow of fodder (or dispensing weight of fodder per revolution of the feed screw 5) is calculated when either any of the fodder portioners or the container 9 is refilled with fodder.

The embodiment of the plant according to the invention shown in the drawing comprises a plurality of fodder portioners, which means a particularly advantageous utilization of the invention. However, it should be pointed out that also a plant comprising one single fodder portioner of the kind above described, which in the drawing is designated with the reference numeral 1, is within the scope of the invention according to the accompanying claims.

## Claims

1. A method of measuring and portioning of fodder by means of a fodder portioner (1) provided with a dispensing device (5,7) for dispensing a desired weight of fodder, in which method the fodder portioner (1) is filled with fodder and the dispensing device (5,7) is activated so that fodder is dispensed from the fodder portioner, characterised by the steps of:
- sensing a given weight of fodder dispensed from the fodder portioner (1), the given weight of fodder being less than the desired weight of fodder to be dispensed,
- registering the value of a volume related operating variable of the dispensing device (5,7) corresponding to said sensed given weight of dispensed fodder, and
- controlling the dispensing device in accordance with the sensed given weight and the registered value to keep the dispensing device activated until the volume related operating variable reaches a value corresponding to the desired weight of dispensed fodder.

2. A method according to claim 1, in which at least one further fodder portioner (2) provided with a further dispensing device (6,8) is filled with fodder and the further dispensing device (6,8) is activated so that fodder is dispensed from the further fodder portioner (2), characterised by controlling the further dispensing device (6,8) in accordance with the sensed given weight and the registered value to keep the further dispensing device activated until the volume related operating variable reaches a value corresponding to the desired weight of fodder dispensed from the further fodder portioner (2).

3. A method according to claim 1 or 2, characterised in that the volume related operating variable is constituted by the time for dispensing the fodder.

4. A method according to claim 1 or 2, characterised in that the volume related operating variable is constituted by the number of revolutions of a feed screw (5) arranged for dispensing the fodder.

5. A plant for measuring and portioning of fodder, comprising a fodder portioner (1), a dispensing device (5,7) for dispensing a desired weight of fodder from the fodder portioner, a weighing means (13) adapted to sense a given weight of fodder dispensed from the fodder portioner, the given weight being less than the desired weight, and a control unit (16) for controlling the dispensing device, the control unit being adapted to sense an operating variable of the dispensing device related to the volume of dispensed fodder, characterised in that:
- the control unit (16) is adapted to register the value of the volume related operating variable in response to the weighing means (13), when this senses the given weight of fodder, and
- the control unit (16) is adapted to control the dispensing device (5,7) in accordance with the sensed given weight and the registered value, such the during operation the dispensing device is kept activated until the volume related operating variable reaches a value corresponding to the desired weight of dispensed fodder.

6. A plant according to claim 5, comprising at least one further fodder portioner (2) provided with a further dispensing device (6,8) characterised in that the control unit (16) is adapted to control said further dispensing device (6,8) such that during operation said further dispensing device (6,8) is kept activated until the volume related operating variable reaches a value corresponding to the desired weight of fodder dispensed from said further fodder portioner (2).

7. A plant according to claim 5 or 6, characterised in that the control unit (16) is adapted to sense the time for dispensing the fodder.

8. A plant according to claim 5 or 6, comprising at least one rotatable feed screw (5,6) for dispensing the fodder, characterised in that the control unit (16) is adapted to sense the number of revolutions the feed screw (5,6) turns during the dispensing of fodder.

## Patentansprüche

1. Verfahren zum Messen und Portionieren von Futter mittels eines Futterportionierers (1) mit einer Ausgabevorrichtung (5, 7) zur Ausgabe eines Soll-Futtergewichts, bei dem man den Futterportionierer (1) mit Futter füllt und die Ausgabevorrichtung (5, 7) aktiviert, so daß das Futter aus dem Futterportioni erer ausgegeben wird,
**dadurch gekennzeichnet,** daß man
- das Istgewicht des aus dem Futterportionierer (1) ausgegebenen Futters erfaßt, wobei das Istgewicht niedriger als das auszugebende Sollgewicht des Futters ist,
- den Wert einer volumenspezifischen Arbeitsvariablen der Ausgabevorrichtung (5, 7) registriert, der dem erfaßten Istgewicht des ausgegebenen Futters entspricht, und
- die Ausgabevorrichtung entsprechend dem erfaßten Istgewicht und dem registrierten Wert ansteuert, um die Ausgabevorrichtung aktiviert zu halten, bis die volumenspezifische Arbeitsvariable einen dem Sollgewicht des ausgegebenen Futter entsprechenden Wert erreicht.

2. Verfahren nach Anspruch 1, bei dem man mindestens einen weiteren Futterportionierer (2), der mit einer weiteren Ausgabevorrichtung (6, 8) versehen ist, mit Futter füllt und die weitere Ausgabevorrichtung (6, 8) aktiviert, so daß der weitere Futterportionierer (2) Futter ausgibt, **dadurch** **gekennzeichnet,** daß man die weitere Ausgabevorrichtung (6, 8) entsprechend dem erfaßten Istgewicht und dem registrierten Wert ansteuert, um die weitere Ausgabevorrichtung aktiviert zu halten, bis die volumenspezifische Arbeitsvariable einen Wert erreicht, der dem Sollgewicht des aus dem weiteren Futterportionierer (2) ausgegebenen Futters entspricht.

3. Verfahren nach Anspruch 1 oder 2, **dadurch gekennzeichnet,** daß die volumenspezifische Arbeitsvariable die Dauer zum Ausgeben des Futters ist.

4. Verfahren nach Anspruch 1 oder 2, **dadurch gekennzeichnet,** daß die volumenspezifische Arbeitsvariable die Anzahl der Umdrehungen einer zum Ausgeben des Futters eingerichteten Schnecke (5) ist.

5. Anlage zum Messen und Portionieren von Futter mit einem Futterportionierer (1), einer Ausgabevorrichtung (5, 7) zur Ausgabe eines Soll-Futtergewichts aus dem Futterportionierer, einer Wiegevorrichtung (13), die ein aus dem Futterportionierer ausgegebenes Ist-Futtergewicht erfassen kann, wobei das Istgewicht kleiner als das Sollgewicht ist, sowie mit einer Steuerung (16) zum Steuern der Ausgabevorrichtung, wobei die Steuerung eine zum Volumen des ausgegebenen Futters in Beziehung stehende Arbeitsvariable der Ausgabevorrichtung erfaßt,
**dadurch gekennzeichnet,** daß
- die Steuerung (16) ansprechend auf die Wiegevorrichtung (13), wenn diese das Ist-Futtergewicht erfaßt, den Wert der volumenspezifischen Arbeitsvariablen registrieren kann, und daß
- die Steuerung (16) die Ausgabevorrichtung (5, 7) entsprechend dem erfaßten Istgewicht und dem registrierten Wert so ansteuern kann, daß die arbeitende Ausgabevorrichtung aktiviert gehalten wird, bis die volumenspezifische Arbeitsvariable einen dem Sollgewicht des ausgegebenen Futters entsprechenden Wert erreicht.

6. Anlage nach Anspruch 5 mit mindestens einem weiteren Futterportionierer (2) mit einer weiteren Ausgabevorrichtung (6, 8), **dadurch gekennzeichnet,** daß die Steuerung (16) die weitere Ausgabevorrichtung (6, 8) so steuern kann, daß die arbeitende weitere Ausgabevorrichtung (6, 8) aktiviert gehalten wird, bis die volumenspezifische Arbeitsvariable einen Wert erreicht, der dem aus dem weiteren Futterportionerer (2) ausgegebenen Soll-Futtergewicht entspricht.

7. Anlage nach Anspruch 5 oder 6, **dadurch gekennzeichnet,** daß die Steuerung (16) die Dauer zum Ausgeben des Futters erfassen kann.

8. Anlage nach Anspruch 5 oder 6 mit mindestens einer drehbaren Schnecke (5, 6) zum Ausgeben des Futters, **dadurch gekennzeichnet,** daß die Steuerung (16) die Anzahl der Umdrehungen der Schnecke (5, 6) beim Ausgeben von Futter erfassen kann.

## Revendications

1. Procédé de dosage et de distribution de fourrage au moyen d'un distributeur de fourrage (1) équipé d'un dispositif d'alimentation (5, 7) pour acheminer un poids désiré de fourrage, procédé dans lequel le distributeur de fourrage (1) est rempli de fourrage et le dispositif d'alimentation (5, 7) est activé de manière que le fourrage soit distribué à partir du distributeur de fourrage,
caractérisé en ce que par les étapes consistant à:
- détecter un poids donnée de fourrage acheminé à partir du distributeur de fourrage (1), le poids donné de fourrage étant inférieur au poids désiré de fourrage à acheminer,
- enregistrer la valeur d'une variable de fonctionnement liée au volume du dispositif d'alimentation (5, 7) correspondant audit poids donné et détecté de fourrage acheminé, et
- commander le dispositif d'alimentation en accord avec le poids donné détecté et la valeur enregistrée pour maintenir le dispositif d'alimentation activé jusqu'à ce que la variable de fonctionnement liée au volume atteigne une valeur correspondant au poids désiré de fourrage acheminé.

2. Procédé selon la revendication 1, dans lequel un autre distributeur de fourrage au moins (2), équipé d'un autre dispositif d'alimentation (6, 8), est rempli de fourrage, et l'autre dispositif d'alimentation (6, 8) est activé de manière que le fourrage soit acheminé à partir de l'autre distributeur de fourrage (2), caractérisé par la commande de l'autre dispositif d'alimentation (6, 8) en accord avec le poids donné détecté et la valeur enregistrée pour maintenir l'autre dispositif d'alimentation activé jusqu'à ce que la variable de fonctionnement liée au volume atteigne une valeur correspondant au poids désiré de fourrage acheminé par l'autre distributeur de fourrage (2).

3. Procédé selon la revendication 1 ou 2, caractérisé en ce que la variable de fonctionnement liée au volume est constituée par la durée nécessaire à l'alimentation du fourrage.

4. Procédé selon la revendication 1 ou 2, caractérisé en ce que la variable de fonctionnement liée au volume est constituée par le nombre de révolutions de la vis d'alimentation (5) agencée pour acheminer le fourrage.

5. Installation pour doser et distribuer du fourrage, comprenant un distributeur de fourrage (1), un dispositif d'alimentation (5, 7) pour acheminer un poids désiré de fourrage à partir du distributeur de fourrage, un moyen de pesage (13) adapté à détecter un poids donné de fourrage acheminé à partir du distributeur de fourrage, le poids donné étant inférieur au poids désiré, et une unité de commande (16) pour commander le dispositif d'alimentation, l'unité de commande étant adaptée à détecter une variable de fonctionnement du dispositif d'alimentation liée au volume de fourrage acheminé, caractérisée en ce que:
- l'unité de commande (16) est adaptée à enregistrer la valeur de la variable de fonctionnement liée au volume en réponse au moyen de pesage (13), quand ce dernier détecte le poids donné de fourrage, et
- l'unité de commande (16) est adaptée à commander le dispositif d'alimentation (5, 7) en accord avec le poids donné détecté et la valeur enregistrée, de manière que pendant le fonctionnement, le dispositif d'alimentation soit maintenu activé jusqu'à ce que la variable de fonctionnement liée au volume atteigne une valeur correspondant au poids désiré de fourrage acheminé.

6. Installation selon la revendication 5, comprenant au moins un autre distributeur de fourrage (2) équipé d'un autre dispositif d'alimentation (6, 8), caractérisée en ce que l'unité de commande (16) est adaptée à commander ledit autre dispositif d'alimentation (6, 8) de manière que pendant le fonctionnement, ledit autre dispositif d'alimentation (6, 8) soit maintenu activé jusqu'à ce que la variable de fonctionnement liée au volume atteigne une valeur correspondant au poids désiré de fourrage acheminé à partir dudit autre distributeur de fourrage (2).

7. Installation selon la revendication 5 ou 6, caractérisée en ce que l'unité de commande (16) est adaptée à détecter la durée nécessaire à l'alimentation du fourrage.

8. Installation selon la revendication 5 ou 6, comprenant au moins une vis d'alimentation rotative (5, 6) pour acheminer le fourrage, caractérisée en ce que l'unité de commande (16) est adaptée à détecter le nombre de révolutions de la vis d'alimentation (5, 6) pendant l'alimentation du fourrage.
